# FASCICULE DE BREVET EUROPEEN

(11) **EP 1 070 687 B1**
(45) Date de publication et mention de la délivrance du brevet: **10.09.2003**
(21) Numéro de dépôt: 00401876.8
(22) Date de dépôt: 30.06.2000
(51) Int. Cl.: C04B 38/00, F01N 3/022

(54) **Structure monolithe nid d'abeilles en matériau céramique poreux, et utilisation comme filtre à particules**
Monolitische Honigwabenstruktur aus porösem Keramikmaterial, und Verwendung als Partikelfilter
Monolithic honeycomb structure made of porous ceramic material, and use as filter for particulates

(30) Priorité: 21.07.1999 FR 9909432
(43) Date de publication de la demande: 24.01.2001
(73) Titulaire: Institut Francais du Petrole, 92852 Rueil-Malmaison Cedex (FR); Céramiques Techniques et Industrielles S.A., 30340 Salindres (FR)
(72) Inventeur: Courty, Philippe, 94800 Villejuif (FR); Dementhon, Jean-Baptiste, 75011 Paris (FR); Joulin, Jean-Pierre, 34790 Grabels (FR); Pourchet, Fabienne, 30340 Salindres (FR)

(56) Documents cités:
- CHEMICAL ABSTRACTS, vol. 118, no. 18, 3 mai 1993 (1993-05-03) Columbus, Ohio, US; abstract no. 174403d, Y. OHASHI ET AL.: "Porous silicon carbide sintered ceramics for exhaust emission control devices and their manufacture" XP000391197 & JP 04 187578 A (IBIDEN CO., LTD.) 6 juillet 1992 (1992-07-06)

## Description

L'invention concerne de nouvelles structures monolithes à canaux parallèles bouchés alternativement sur l'une ou l'autre des faces extrêmes desdites structures monolithes, utilisables notamment comme filtres à particules pour les gaz d'échappement des moteurs diesel. L'invention concerne également la fabrication de telles structures.

### État de la technique antérieure

Les gaz d'échappement des moteurs à combustion interne et notamment ceux des moteurs diesel contiennent des suies ou particules qui polluent l'atmosphère et peuvent entraîner de graves dommages pour la santé. Différentes méthodes ont été envisagées pour tenter de résoudre ce problème. On propose notamment de collecter ces particules sur des filtres constitués de matériaux poreux placés sur la ligne d'échappement du moteur.

On a déjà décrit dans l'art antérieur des filtres consistant en des monolithes de type nid d'abeilles en matériaux réfractaires, tels que la cordiérite ou le carbure de silicium.

Ces monolithes comprennent une pluralité de canaux séparés par des parois poreuses, lesdits canaux étant alternativement bouchés à l'une ou l'autre de leurs extrémités de manière à contraindre le flux gazeux à diffuser à travers lesdites parois.

Les monolithes de ce type fabriqués en cordiérite présentent l'inconvénient de présenter un vieillissement prématuré, dû à une mauvaise dissipation de la chaleur lors de la combustion des suies retenues, alliée à une résistance mécanique faible.

Quant aux monolithes en carbure de silicium déjà décrits antérieurement, leur fabrication est difficile à mettre en oeuvre.

En effet, une technique classique consiste à partir de deux poudres de carbure de silicium de granulométries différentes qui sont malaxées, extrudées, séchées et portées à une température très élevée, de l'ordre de 2100-2500 °C, en général sous atmosphère inerte ; dans ces conditions, on observe une croissance anormale des cristaux les plus gros et les cristaux les plus fins subissent une évaporation - condensation, ce qui entraîne finalement des modifications non souhaitées des propriétés du monolithe ainsi fabriqué.

Plus récemment, on a proposé un procédé de fabrication réalisé à partir de silicium en poudre et de carbone ou d'un matériau organique qui, par décomposition thermique, fournira le carbone nécessaire pour se combiner au silicium. La fabrication selon une telle méthode requiert également une étape finale de calcination à une température élevée, généralement supérieure à 1650 °C et allant le plus souvent jusqu'à 2100-2400 °C, sous atmosphère inerte.

### Les monolithes

L'invention propose un nouveau monolithe utilisable comme filtre à particules pour les gaz d'échappement des moteurs diesel, ce monolithe présentant l'avantage de pouvoir être fabriqué par un procédé dans lequel l'étape de calcination ne nécessite de mettre en oeuvre ni une température de plus de 1650 °C, ni une atmosphère inerte.

Le monolithe selon l'invention peut être défini en ce qu'il consiste en un solide constitué d'un matériau réfractaire poreux dont le volume extérieur est délimité par une surface cylindrique (au sens large) dont la génératrice s'appuie sur deux faces extrêmes de forme quelconque, par exemple carrée, rectangulaire, polygonale, circulaire ou elliptique. Le solide est parcouru par une pluralité de canaux parallèles entre eux et à la génératrice et débouchant sur les faces extrêmes dudit monolithe, ces canaux pouvant avoir une section carrée, rectangulaire ou triangulaire, ou encore polygonale.

Le monolithe de l'invention est essentiellement constitué d'un matériau comprenant
- de 70 à 97 % en masse, de préférence de 82 à 90 % en masse, de carbure de silicium de type cristallographique α et/ou β, ayant au moins une granulométrie et préférentiellement au moins deux granulométries ;
- et de 3 à 30 % en masse, de préférence de 18 à 15 % en masse, d'au moins une phase céramique liante sous la forme d'une poudre micronique et/ou de particules obtenues par atomisation, comprenant au moins un oxyde simple choisi par exemple parmi B₂O₃, Al₂O₃, SiO₂, MgO, K₂O, Li₂O, Na₂O, CaO, BaO, TiO₂, ZrO₂ et Fe₂O₃ et/ou au moins un oxyde mixte choisi par exemple parmi les aluminosilicates alcalins (de Li, Na, ou K) ou alcalino-terreux (de Mg, Ca, Sr ou Ba), les argiles, la bentonite, les feldspaths ou autres matériaux silico-alumineux naturels.

Le matériau constituant le monolithe - c'est-à-dire les parois séparant les canaux - présente en général une porosité de 35 à 65 %, de préférence de 40 à 60 %.

La répartition des pores est essentiellement monopopulée et peut être centrée par exemple entre 5 et 60 micromètres, de préférence de 10 à 40 micromètres, et de manière encore plus préférée de 15 à 35 micromètres.

En fait, la taille des pores dépend essentiellement de la taille des grains de carbure de silicium et de celle des grains du liant céramique utilisé, comme cela sera décrit plus loin, notamment en relation avec la procédure de fabrication des monolithes de l'invention.

Le carbure de silicium qui représente la partie prépondérante du matériau constitutif des monolithes de l'invention a de préférence plusieurs granulométries, par exemple de deux à cinq granulométries. Ainsi, on peut utiliser des carbures de silicium désignés, selon la norme FEPA 42 F 1984 par les symboles de F 100 à F 1200 (ce qui correspond à des grains de taille moyenne de 3 à 125 micromètres. Dans le cas d'un carbure de silicium à deux granulométries, on peut envisager par exemple la présence d'une proportion majeure (par exemple de l'ordre de 90 % en masse) de carbure de silicium sous la forme de grains de 15 à 125 micromètres et d'une proportion mineure (par exemple de l'ordre de 10 % en masse) de carbure de silicium sous la forme de grains ayant une taille moyenne inférieure à 15 micromètres.

De préférence, la phase céramique liante, présente dans le matériau constitutif des structures monolithes de l'invention, a une composition globale ajustée de manière à présenter un coefficient de dilatation voisin de celui du carbure de silicium, à 50 % près, de préférence à 30 % près et de manière encore plus préférée à 25 % près.

En général, les canaux traversant le monolithe sont, à chaque extrémité, alternativement ouverts ou fermés, de telle manière que, pour chaque canal ouvert à une extrémité, les canaux adjacents soient fermés, le flux gazeux pénétrant le monolithe étant alors contraint de diffuser au travers des parois poreuses séparant les canaux. Par exemple pour des canaux de section carrée, les faces extrêmes du monolithe présentent l'aspect d'un damier.

Le monolithe peut présenter un nombre de cellules (ou de canaux) d'environ 50 à 400, plus particulièrement d'environ 100 à 200 par pouce carré (soit d'environ 7,75 à 62 par cm², plus particulièrement d'environ 15,5 à 31 par cm²). Les canaux présentent approximativement une section d'environ de 0,5 à 9 mm², plus particulièrement de 1,5 à 4 mm², compte tenu d'une épaisseur des parois séparant les canaux d'environ 0,3 à 1,5 mm, plus particulièrement de 0,5 à 0,8 mm.

Les monolithes de l'invention présentent des propriétés de résistance mécanique et de résistance aux chocs thermiques exceptionnelles.

### Fabrication du monolithe

Le monolithe de l'invention peut être fabriqué par tout mode opératoire approprié, comprenant notamment une étape de malaxage des constituants résultant en un produit homogène sous la forme d'une pâte liée, une étape d'extrusion dudit produit à travers une filière appropriée de manière à former le monolithe de type nid d'abeilles, une étape de séchage du monolithe obtenu, puis une étape de calcination, dont l'avantage, selon l'invention, est qu'elle est réalisée à une température ne dépassant pas 1650 °C, de préférence inférieure à 1550 °C et sous une atmosphère contenant de l'oxygène. L'opération visant à boucher un canal sur deux à chaque extrémité du monolithe peut être effectuée à un stade quelconque de la fabrication, soit sur le monolithe cru, juste après l'extrusion, soit sur le monolithe séché , soit sur le monolithe qui a subi une étape de calcination.

Un mode opératoire particulier est décrit plus en détail ci-après.

Dans la première étape, on mélange du carbure de silicium de granulométrie convenable, la phase liante constituée d'au moins un oxyde simple et/ou d'au moins un oxyde mixte tels que définis plus haut et en général un agent porogène, dans un malaxeur à sec, puis on ajoute au moins un plastifiant organique, choisi par exemple parmi les alkylcelluloses (méthyl-, éthyl- ou carboxyméthylcellulose), l'alcool polyacrylique, l'acide stéarique, les bio-polymères, l'alcool polyvinylique, les gommes diverses (xanthane, arabique ou adragante) et de l'eau.

Les agents porogènes utilisables sont par exemple l'amidon, la cellulose, le noir de carbone, les farines de bois, le polystyrène, le nitrate d'ammonium, le glucose, les polyéthylènes glycols ou tout matériau organique ou inorganique sous la forme d'une poudre calibrée, susceptible de se décomposer en produits volatils lors de la calcination du matériau.

Pour réaliser la porosité recherchée pour le matériau constituant la structure monolithe de l'invention, on utilise en général un ensemble de carbures de silicium ayant des granulométries variées, par exemple un ou plusieurs carbures de silicium ayant de relativement gros grains (dans l'intervalle de tailles de 15 à 125 micromètres) et un ou plusieurs carbures de silicium ayant des grains relativement fins (de tailles inférieures à 15 micromètres), dont le diamètre influe sur le diamètre des pores, en y faisant un ajout d'une proportion d'environ 5 à 30 % en masse d'au moins un agent porogène, choisi en fonction de la taille des pores recherchée.

On peut encore ajouter au mélange au moins un agent défloculant. On malaxe jusqu'à obtention d'une pâte homogène.

Le produit homogène peut avantageusement être mûri (vieilli) par exemple à température ambiante et sous hygrométrie contrôlée (pour éviter l'évaporation de l'eau), par exemple pendant 24 heures.

Dans l'étape d'extrusion, on extrude la pâte par exemple sous vide (typiquement sous 15 à 20 mm de mercure) dans une extrudeuse à vis (simple vis ou double vis) ou à piston, de manière à obtenir des pains céramiques crus sous forme de monolithes nid d'abeilles.

Ces pains céramiques crus sont ensuite séchés à une température allant par exemple de la température ambiante jusqu'à 110 °C, sous atmosphère à hygrométrie contrôlée, pendant un temps suffisant pour amener leur teneur en eau non liée chimiquement (eau libre) à moins de 1 % en masse, le séchage durant par exemple une vingtaine d'heures.

Toute méthode connue de l'homme du métier permettant de satisfaire à cet objectif dans des conditions technico-économiques optimales fait implicitement partie du procédé de fabrication de l'invention.

On réalise la calcination de la structure monolithe, sous une atmosphère contenant de l'oxygène, en général sous air, en élevant progressivement la température, par exemple de 10 à 50 °C/heure, en la maintenant à une température de 1100 à 1650 °C, par exemple de 1300 à 1650°C, de préférence de 1350 à 1550°C, pendant au moins 1 heure, de préférence au moins 2 heures, puis on la refroidit jusqu'à la température ambiante.

Le bouchage d'un canal sur deux sur chacune des faces extrêmes du monolithe est effectué par application de compositions céramiques connues de l'homme de métier. Leur composition est en général aussi voisine que possible de la composition constituant le monolithe lui même, mais est ajustée de manière à présenter un retrait à la cuisson inférieur à celui du matériau constituant le monolithe et à assurer l'étanchéité des canaux ainsi obturés après la cuisson, ce, quelles que soient les conditions de montée ou de chute de température auxquelles le monolithe pourra être soumis lors de son utilisation.

Les structures monolithes de l'invention consistent en général en des monolithes élémentaires que l'on assemble par collage céramique selon toute technique connue de l'homme du métier pour constituer le filtre à particules ayant la géométrie voulue pour pouvoir être installé sur la ligne d'échappement du moteur diesel.

L'exemple qui suit est destiné à illustrer l'invention. Il ne doit en aucune manière être considéré comme limitatif.

### Exemple

Dans un malaxeur, on introduit :
- 85 g de carbure de silicium de granulométrie F 100 (ayant une taille moyenne de 125 micromètres), 10 g d'un mélange de 50 parties d'alumine Al₂O₃, 30 parties de zircone ZrO₂, 20 parties de silice SiO₂, 5 g d'argile, 5 g d'un plastifiant cellulosique, 12 g de farine de bois calibrée de granulométrie de 2 à 100 micromètres et de l'eau.

On malaxe à sec pendant 5 minutes, on ajoute de l'eau pendant 5 minutes et on poursuit le malaxage encore 15 minutes, formant ainsi une pâte homogène présentant une plasticité appropriée (déterminée par la mesure d'une force d'extrusion sur un appareil de contrôle).

La pâte est malaxée pendant 24 heures sous hygrométrie contrôlée, puis extrudée à travers une filière sous la forme d'un monolithe nid d'abeilles d'une longueur de 20 cm de longueur et ayant une section carrée de 7 cm de côté, présentant 196 canaux (14x14) l'épaisseur des parois entre les canaux étant de 0,5 mm.

On sèche le monolithe à température et hygrométrie contrôlées, jusqu'à 110°C maximum, le cycle de séchage durant 20 heures.

Pour le bouchage alterné des canaux sur chaque face extrême du monolithe on masque les canaux qui ne devront pas être bouchés par un cache, on applique sur chacune des faces une pâte de même composition que la pâte qui a servi à former le monolithe mais sans agent porogène, en faisant pénétrer ladite pâte dans les canaux à boucher à une profondeur de 1 cm

On réalise la cuisson du monolithe par chauffage progressif (montée de 20°C/heure) sous air jusqu'à une température de 1480 °C qui est maintenue pendant 5 heures. On laisse refroidir.

On obtient finalement un monolithe nid d'abeille ayant une porosité de 51 %, une densité de 1,55 et une résistance à la compression très satisfaisante.

La répartition des pores est essentiellement monopopulée et centrée sur 40 µm.

## Revendications

1. Structure monolithe de type nid d'abeilles en matériau céramique poreux, dont la forme extérieure est délimitée par une surface cylindrique s'appuyant sur deux faces extrêmes de forme quelconque, ladite structure comportant une pluralité de canaux parallèles séparés entre eux par des parois poreuses, ladite structure étant **caractérisée en ce que** le matériau céramique poreux qui la constitue comprend :
• de 70 à 97 % en masse de carbure de silicium de type cristallographique α et/ou β ayant au moins une granulométrie et préférentiellement au moins deux granulométries ; et
• de 3 à 30 % en masse d'au moins une phase céramique liante sous la forme d'une poudre micronique ou de particules obtenues par atomisation, comprenant au moins un oxyde simple choisi par exemple parmi B₂O₃, Al₂O₃, SiO₂, MgO, K₂O, Li₂O, Na₂O, CaO, BaO, TiO₂, ZrO₂ et Fe₂O₃ et/ou au moins un oxyde mixte choisi par exemple parmi les aluminosilicates alcalins ou alcalins terreux, les argiles, la bentonite, les feldspaths ou autres matériaux silico-alumineux naturels.

2. Structure monolithe selon la revendication 1 **caractérisée en ce que** le matériau céramique constitutif présente une porosité de 35 à 65 % et une répartition de pores essentiellement monopopulée centrée entre 5 et 60 micromètres.

3. Structure monolithe selon la revendication 1 ou 2 **caractérisée en ce que** le carbure de silicium présente une granulométrie correspondant à des grains de taille moyenne de 3 à 125 micromètres.

4. Structure monolithe selon l'une des revendications 1 à 3 **caractérisée en ce que** le carbure de silicium a au moins deux granulométries.

5. Structure monolithe selon la revendication 4 **caractérisée en ce que** le carbure de silicium a de deux à cinq granulométries.

6. Structure monolithe selon la revendication 4 ou 5 **caractérisée en ce qu'**une proportion majeure de carbure de silicium est sous la forme de grains de 15 à 125 micromètres et une proportion mineure de carbure de silicium est sous la forme de grains ayant une taille moyenne inférieure à 15 micromètres.

7. Structure monolithe selon l'une des revendications 1 à 6 **caractérisée en ce que** la phase céramique liante présente une composition globale ajustée de manière à présenter un coefficient de dilatation voisin de celui du carbure de silicium à 50 % près.

8. Structure monolithe selon l'une des revendications 1 à 7 **caractérisée en ce qu'**elle présente un nombre de canaux de 7,75 à 62 par cm², lesdits canaux ayant une section de 0,5 à 9 mm², les parois séparant les canaux ayant une épaisseur d'environ 0,3 à 1,5 mm.

9. Structure monolithique selon l'une des revendications 1 à 8 **caractérisée en ce que** lesdits canaux sont ouverts ou bouchés alternativement sur l'une ou l'autre de ses deux extrémités.

10. Procédé de fabrication d'une structure monolithe selon l'une des revendications 1 à 9 **caractérisé en ce qu'**il comprend une étape de malaxage des constituants résultant en un produit homogène sous la forme d'une pâte liée, une étape d'extrusion dudit produit à travers une filière appropriée de manière à former des pains céramiques sous forme de monolithe nid d'abeilles, une étape de séchage des pains de monolithe obtenus, et une étape de calcination réalisée à une température ne dépassant pas 1650 °C et sous une atmosphère contenant de l'oxygène, une étape de bouchage d'un canal sur deux à chaque extrémité du monolithe étant effectuée à un stade quelconque du procédé de fabrication, après l'extrusion.

11. Procédé selon la revendication 10 **caractérisé en ce que**, dans la première étape on malaxe un mélange comprenant au moins du carbure de silicium ayant au moins une granulométrie, une phase liante constituée d'au moins un oxyde simple et/ou d'au moins un oxyde mixte et au moins un agent porogène, dans un malaxeur à sec, puis on ajoute au moins un plastifiant organique et de l'eau.

12. Procédé selon l'une des revendications 10 et 11 **caractérisé en ce que**, pour réaliser la porosité recherchée pour le matériau constituant la structure monolithe de l'invention, on utilise un ensemble de carbures de silicium comprenant un ou plusieurs carbures de silicium ayant des grains de tailles de 15 à 125 micromètres et un ou plusieurs carbures de silicium ayant des grains de tailles inférieures à 15 micromètres et on effectue un ajout d'une proportion d'environ 5 à 30 % en masse d'au moins un agent porogène choisi en fonction de la taille des pores recherchée.

13. Procédé selon l'une des revendications 10 à 12 **caractérisé en ce que** le produit homogène obtenu dans la première étape est mûri à température ambiante et sous hygrométrie contrôlée.

14. Procédé selon l'une des revendications 10 à 13 **caractérisé en ce que**, dans l'étape d'extrusion, on fait passer la pâte, sous un vide de 15 à 20 mm de mercure, dans une extrudeuse à vis ou à piston, produisant ainsi des pains céramiques crus, sous forme de monolithes.

15. Procédé selon l'une des revendications 10 à 14 **caractérisé en ce que**, dans l'étape de séchage, les pains céramiques crus obtenus sont séchés à une température allant de la température ambiante jusqu'à 110 °C pendant un temps suffisant pour amener la teneur en eau non liée chimiquement à moins de 1 % en masse.

16. Procédé selon l'une des revendications 10 à 15 **caractérisé en ce que**, dans l'étape de calcination, la structure monolithe est portée à une température de 1100 à 1650 °C, sous une atmosphère contenant de l'oxygène.

17. Procédé selon la revendication 16 **caractérisé en ce que** la température de calcination est de 1300 à 1650 °C.

18. Procédé selon la revendication 16 **caractérisé en ce que** la température de calcination est de 1350 à 1550°C.

19. Procédé selon l'une des revendications 10 à 18 **caractérisé en ce que** le bouchage d'un canal sur deux sur chacune des faces extrêmes de la structure monolithe est réalisé à l'aide d'un matériau analogue au matériau constitutif du monolithe, mais sans porogène, et présente un retrait à la cuisson inférieur à celui dudit matériau.

20. Utilisation d'une structure monolithe selon l'une des revendications 1 à 9 ou fabriquée par un procédé selon l'une des revendications 10 à 19, comme filtre à particules sur la ligne d'échappement d'un moteur diesel.

## Patentansprüche

1. Monolithstruktur vom Bienenwabentyp aus porösem keramischem Material, dessen äußere Form durch eine zylindrische Form begrenzt ist, die sich auf zwei Endflächen irgendeiner Form stützt, wobei die Struktur eine Vielzahl paralleler Kanäle umfasst, die untereinander durch poröse Wände getrennt sind und die Struktur **dadurch gekennzeichnet ist, dass** das sie bildende keramische Material umfasst:
- 70 bis 97 Masse-% Siliziumcarbid vom kristallographischen Typ α und/oder β mit wenigstens einer Granulometrie und vorzugsweise wenigstens zwei Granulometrien, die ausgewählt sind; und
- 3 bis 30 Masse-% wenigstens einer keramischen Bindemittelphase in Form eines Mikropulvers oder von durch Zerstäubung erhaltener Teilchen, umfassend wenigstens ein einfaches Oxid, das z.B. gewählt ist unter B₂O₃, Al₂O₃, SiO₂, MgO, K₂O, Li₂O, Na₂O, CaO, BaO, TiO₂, ZrO₂ und Fe₂O₃, und/oder wenigstens ein gemischtes Oxid, das z.B. unter den alkalischen oder erdalkalischen Aluminosilikaten, Tonen, Bentonit, Felspaten oder anderen natürlichen siliziumoxidhaltigen Aluminiummaterialien gewählt ist.

2. Monolithstruktur nach Anspruch 1, **dadurch gekennzeichnet, dass** das zugrunde liegende keramische Material eine Porosität von 35 bis 65% aufweist und eine im wesentlichen monobesetzte Porenverteilung, die zwischen 5 und 60 µm zentriert ist.

3. Monolithstruktur nach Anspruch 1 oder 2, **dadurch gekennzeichnet, dass** das Siliziumcarbid eine Granulometrie aufweist, die Körnern eines mittleren Umfangs von 3 bis 125 µm entspricht.

4. Monolithstruktur nach einem der Ansprüche 1 bis 3, **dadurch gekennzeichnet, dass** das Siliziumcarbid wenigstens zwei Granulometrien aufweist.

5. Monolithstruktur nach Anspruch 4, **dadurch gekennzeichnet, dass** das Siliziumcarbid zwei bis fünf Granulometrien aufweist.

6. Monolithstruktur nach Anspruch 4 oder 5, **dadurch gekennzeichnet, dass** ein größerer Teil Siliziumcarbid in Form von Körnern von 15 bis 125 µm vorliegt und ein kleinerer Teil Siliziumcarbid in Form von Körnern mit einem mittleren Umfang kleiner 15 µm vorliegt.

7. Monolithstruktur nach einem der Ansprüche 1 bis 6, **dadurch gekennzeichnet, dass** die keramische Bindemittelphase eine Gesamtzusammensetzung aufweist, die derart eingestellt ist, dass ein Ausdehnungskoeffizient bis auf 50% nähe jenem des Siliziumcarbids vorliegt.

8. Monolithstruktur nach einem der Ansprüche 1 bis 7, **dadurch gekennzeichnet, dass** sie eine Anzahl von Kanälen von 7,75 bis 62 pro cm² aufweist, wobei die Kanäle einen Querschnitt von 0,5 bis 9 mm² haben und die die Kanäle trennenden Wände eine Dicke von etwa 0,3 bis 1,5 mm haben.

9. Monolithstruktur nach einem der Ansprüche 1 bis 8, **dadurch gekennzeichnet, dass** die Kanäle abwechselnd an dem einen oder anderen ihrer beiden Enden offen oder verstopft sind.

10. Herstellungsverfahren einer Monolithstruktur nach einem der Ansprüche 1 bis 9, **dadurch gekennzeichnet, dass** es eine Stufe zum Kneten der Bestandteile, die ein homogenes Produkt in Form einer gebundenen Paste ergibt, eine Extrusionsstufe dieses Produkts entlang eines geeigneten Siebes derart, dass keramische Blöcke in Form von Bienenwabenmonolith gebildet werden, eine Trocknungsstufe der erhaltenen Monolithblöcke und eine Kalzinierungsstufe umfasst, die bei einer Temperatur, die 1650°C nicht überschreitet, und unter einer sauerstoffhaltigen Atmosphäre durchgeführt wird, wobei eine Stufe zum Verstopfen von einem von zwei Kanälen an jedem Ende des Monolithen in irgendeinem Stadium des Herstellungsverfahrens nach der Extrusion durchgeführt wird.

11. Verfahren nach Anspruch 10, **dadurch gekennzeichnet, dass** man in der ersten Stufe ein Gemisch, das wenigstens Siliziumcarbid mit wenigstens einer Granulometrie, eine Bindemittelphase, die aus wenigstens einem einfachen Oxid und /oder wenigstens einem gemischten Oxid besteht, und ein porogenes Mittel umfasst, in einem Trockenknetmischer knetet und dann wenigstens einen plastifizierenden organischen Stoff und Wasser zugibt.

12. Verfahren nach einem der Ansprüche 10 und 11, **dadurch gekennzeichnet, dass** man, um die für das die Monolithstruktur der Erfindung bildende Material gewünschte Porosität zu verwirklichen, eine Zusammenstellung von Siliziumcarbiden verwendet, die eines oder mehrere Siliziumcarbide mit Kömergrößen von 15 bis 125 µm und eines oder mehrere Siliziumcarbide mit Körnergrößen unter 15 µm umfasst, und man eine Zugabe eines Anteils von etwa 5 bis 30 Masse-% wenigstens eines porogenen Mittels durchführt, dass in Abhängigkeit der gewünschten Porengröße gewählt wird.

13. Verfahren nach einem der Ansprüche 10 bis 12, **dadurch gekennzeichnet, dass** das in der ersten Stufe erhaltene homogene Produkt bei Umgebungstemperatur und unter kontrollierter Hygrometrie gereift wird.

14. Verfahren nach einem der Ansprüche 10 bis 13, **dadurch gekennzeichnet, dass** man in der Extrusionsstufe die Paste unter einem Vakuum von 15 bis 20 mm Quecksilber in einem Extrudator mit Schnecke oder Kolben durchlaufen lässt, der so keramische Rohblöcke in Form von Monolithen erzeugt.

15. Verfahren nach einem der Ansprüche 10 bis 14, **dadurch gekennzeichnet, dass** die erhaltenen Rohblöcke in der Trocknungsstufe bei einer Temperatur, die von der Umgebungstemperatur bis 110°C reicht, und für eine ausreichende Zeit getrocknet werden, um den nicht chemisch gebundenen Wassergehalt auf weniger als 1 Masse-% zu bringen.

16. Verfahren nach einem der Ansprüche 10 bis 15, **dadurch gekennzeichnet, dass** die Monolithstruktur in der Kalzinierungsstufe unter sauerstoffhaltiger Atmosphäre auf eine Temperatur von 1100 bis 1650°C gebracht wird.

17. Verfahren nach Anspruch 16, **dadurch gekennzeichnet, dass** die Kalzinierungstemperatur 1300 bis 1650°C ist.

18. Verfahren nach Anspruch 16, **dadurch gekennzeichnet, dass** die Kalzinierungstemperatur 1350 bis 1550°C ist.

19. Verfahren nach einem der Ansprüche 10 bis 18, **dadurch gekennzeichnet, dass** das Verstopfen von einem von zwei Kanälen an jeder der Endseiten der Monolithstruktur mit Hilfe eines Materials durchgeführt wird, das dem den Monolithen bildenden Material analog aber progenlos ist, und ein Schrumpfen beim Brennen unterhalb von jenem des Materials aufweist.

20. Verwendung einer Monolithstruktur nach einem der Ansprüche 1 bis 9 oder hergestellt nach einem der Ansprüche 10 bis 19 als Partikelfilter bei der Auspuffleitung eines Dieselmotors.

## Claims

1. A monolithic honeycomb-type structure made of porous ceramic, whose outside shape is delimited by a cylindrical surface that rests on two end faces of any shape, whereby said structure comprises a number of parallel passages that are separated from one another by porous walls, and whereby said structure is **characterized in that** the porous ceramic that constitutes it comprises:
· 70 to 97% by mass of α and/or β crystallographic-type silicon carbide that has at least one grain size and preferably at least two grain sizes; and
· 3 to 30% by mass of at least one bonding ceramic phase in the form of a micronic powder and/or particles that are obtained by atomization, comprising at least one simple oxide that is selected from among, for example, B₂O₃, Al₂O₃, SiO₂, MgO, K₂O, Li₂O, Na₂O, CaO, BaO, TiO₂, ZrO₂ and Fe₂O₃ and/or at least one mixed oxide that is selected from among, for example, the alkaline aluminosilicates or alkaline-earth aluminosilicates, clays, bentonite, feldspars or other natural silico-aluminous materials.

2. A monolithic structure according to claim 1, wherein the constituent ceramic material has a porosity of 35 to 65% and an essentially monopopulated pore distribution of between 5 and 60 micrometers.

3. A monolithic structure according to claim 1 or 2, wherein the silicon carbide has a grain size that corresponds to grains of a mean size of 3 to 125 micrometers.

4. A monolithic structure according to one of claims 1 to 3, wherein the silicon carbide has at least two grain sizes.

5. A monolithic structure according to claim 4, wherein the silicon carbide has two to five grain sizes.

6. A monolithic structure according to claim 4 or 5, wherein a major proportion of silicon carbide is in the form of grains of 15 to 125 micrometers and a minor proportion of silicon carbide is in the form of grains that have a mean size that is less than 15 micrometers.

7. A monolithic structure according to one of claims 1 to 6, wherein the bonding ceramic phase has an overall composition that is adjusted to exhibit an expansion coefficient that is close to that of silicon carbide of nearly 50%.

8. A monolithic structure according to one of claims 1 to 7, wherein it has a number of passages of 7.75 to 62 per cm², whereby said passages have a section of 0.5 to 9 mm², and whereby the walls that separate the passages have a thickness of about 0.3 to 1.5 mm.

9. A monolithic structure according to one of claims 1 to 8, wherein said passages are open or plugged alternately on one of its two ends or the other.

10. A process for the production of a monolithic structure according to one of claims 1 to 9, wherein it comprises a stage for mixing components that results in a homogeneous product in the form of a thickened paste, an extrusion stage of said product through a suitable die to form ceramic slabs in the form of a honeycomb monolith, a stage for drying monolithic slabs that are obtained, and a calcination stage that is carried out at a temperature that does not exceed 1650°C and under an atmosphere that contains oxygen, whereby a stage for plugging every other passage at each end of the monolith is carried out at any stage of the process of production, after extrusion.

11. A process according to claim 10, wherein in the first stage, a mixture is mixed that comprises at least silicon carbide that has at least one grain size, a bonding phase that consists of at least one simple oxide and/or at least one mixed oxide and at least one pore-forming agent, in a dry mixer, then at least one organic plasticizer and water are added.

12. A process according to one of claims 10 and 11, wherein to produce the desired porosity for the material that constitutes the monolithic structure of the invention, a group of silicon carbides comprising one or more silicon carbides having grains of sizes of 15 to 125 micrometers and one or more silicon carbides having grains of sizes less than 15 micrometers are used, and an addition of a proportion of about 5 to 30% by mass of at least one pore-forming agent that is selected based on the desired size of the pores is carried out.

13. A process according to one of claims 10 to 12, wherein the homogeneous product that is obtained in the first stage is cured at ambient temperature and under controlled hygrometry.

14. A process according to one of claims 10 to 13, wherein in the extrusion stage, the paste is passed, under a vacuum of 15 to 20 mm of mercury, into a screw extruder or piston extruder, thus producing crude ceramic slabs, in the form of monoliths.

15. A process according to one of claims 10 to 14, wherein in the drying stage, the crude ceramic slabs that are obtained are dried at a temperature from ambient temperature to 110°C for an adequate time to bring the content of water that is not bonded chemically to less than 1% by mass.

16. A process according to one of claims 10 to 15, wherein in the calcination stage, the monolithic structure is brought to a temperature of 1100 to 1650°C, under an atmosphere that contains oxygen.

17. A process according to claim 16, wherein the calcination temperature is 1300 to 1650°C.

18. A process according to claim 16, wherein the calcination temperature is 1350 to 1550°C.

19. A process according to one of claims 10 to 18, wherein the plugging of every other passage on each of the end faces of the monolithic structure is carried out with a material that is similar to the constituent material of the monolith, but without pore-forming material, and that has a contraction upon firing that is smaller than that of said material.

20. The use of a monolithic structure according to one of claims 1 to 9 or produced by a process according to one of claims 10 to 19, as a particle filter in the exhaust line of a diesel engine.
